# EUROPÄISCHE PATENTANMELDUNG

(11) **EP 0 971 563 A1**
(43) Veröffentlichungstag der Anmeldung: **12.01.2000**
(21) Anmeldenummer: 98103493.7
(22) Anmeldetag: 27.02.1998
(51) Int. Cl.: H05B 6/80, A47J 37/06

(54) **Vorrichtung und Verfahren zum Zubereiten von Nahrungsmittelportionen**

(71) Anmelder: GVL Gesellschaft zum Vertrieb von Lebensmittelautomaten und -produkten mbH, 81479 München (DE)
(72) Erfinder: Die Erfindernennung liegt noch nicht vor
(74) Vertreter: Kaminski, Susanne, Dr.

(57) **Zusammenfassung**

Die Vorrichtung zum Zubereiten von Nahrungsmittel-Portionen (4) umfasst einen Mikrowellenraum (1), in dem eine Portion (4) erhitzbar ist. Zumindest ein Teil einer Berandung (2) des Mikrowellenraumes (1) ist als Bratfläche (2') ausgebildet. Wenn nun die Portion im Mikrowellenofen an der Bratfläche (2') anliegt, kann eine äusserst schnelle Zubereitung mit Erwärmung und Anbraten durchgeführt werden. Die Vorrichtung kann an die möglichen Portionen angepasst äusserst klein dimensioniert werden. Das Verfahren zum Zubereiten von Nahrungsmittel-Portionen (4) sieht vor, dass beim Erwärmen mittels Mikrowellen zwei einander gegenüberliegende Randflächen der Portion (4) mit Bratflächen (2') in Kontakt sind.

## Beschreibung

Die Erfindung bezieht sich auf eine Vorrichtung nach dem Oberbegriff des Anspruches 1 und auf ein Verfahren nach dem Oberbegriff des Anspruches 9.

In Restaurants und insbesondere in Schnellimbiss-Betrieben müssen essbereite Nahrungsmittelportionen kurze Zeit nach der Bestellung abgegeben werden können. Die Zubereitung darf nicht arbeitsintensiv sein. Dazu werden etwa ganze Menues oder Teile davon vorgängig zubereitet und bis zur Bestellung, bzw. bis kurz vor der Abgabe, gelagert. Direkt vor der Abgabe werden diese Menues in einem Mikrowellenofen, oder gegebenenfalls in einem Dampferhitzer auf die gewünschte Abgabetemperatur erhitzt. Bei angebratenen, bzw. gerösteten Speiseteilen ist es nicht zweckmässig, wenn sie im gerösteten Zustand gelagert werden müssen. Daher werden Röstbeilagen, wie beispielsweise geraspelte Kartoffelmassen, Maisscheiben, Teigprodukte, Bratlinge oder auch Fleischstücke direkt vor der Abgabe geröstet. Weil die Lagerung im gefrorenen oder gekühlten Zustand erfolgt, wird die zu röstende Portion etwa in einem Mikrowellenofen erwärmt und anschliessend auf einer Bratfläche geröstet bzw. angebraten. Die dabei nötigen Manipulationen sind aufwendig und umfassen beim Mikrowellenofen das Einführen und Entnehmen und bei der Bratvorrichtung das Einstellen der gewünschten Brattemperatur, das Einlegen des Röstgutes, das Überwachen des Röstvorganges, insbesondere auch das Wenden bei beidseitiger Röstung, und am Schluss das Entnehmen.

Um die Zubereitungszeit zu verkürzen, wurde gemäss der US 5 1 66 485 eine Bratpfanne entwickelt, die in einen Mikrowellenofen einsetzbar ist. Beim Zubereiten eines Hamburgers wird dieser zuerst in der erhitzten Bratpfanne auf einer Seite angebraten, dann wird er gewendet und mitsamt der Pfanne in den Mikrowellenofen eingebracht. Dort wird das Innere des Hamburgers von Mikrowellen erhitzt und gleichzeitig erfolgt auf der noch heissen Bratpfanne ein Weiterbraten der zweiten Seite des Hamburgers. Diese Lösung hat den Nachteil, dass während des gesamten Zubereitungsvorgangs eine Person den Ablauf durchführen bzw. die Zeiten der beiden Hauptschritte überwachen muss. Zudem ist eine Bratpfanne und der Mikrowellenofen während der Zubereitungszeit belegt. Die bestenfalls erzielbare Zubereitungszeit beträgt immerhin noch 6 Minuten und liegt somit nicht wesentlich unter der Zeit von 9 Minuten, die bei der konventionellen Zubereitung in der Bratpfanne benötigt wird.

Aus der US 5 107 087 ist ein Behälter bekannt, der das Anbräunen von Nahrungsmitteln im Mikrowellenofen ermöglicht. Dazu umfasst der Behälter eine Wärmeaufnahmeschicht, die aufgrund einer hohen Dielektrizitätskonstante Energie aus dem Mikrowellenfeld in Wärme umwandelt. Diese Wärme ist als Kontaktwärme an das Nahrungsmittel übertragbar, so dass dieses im Kontaktbereich zum Behälter angebräunt wird. Aufgrund der hohen Dielektrizitätskonstanten des Behälters wird das Mikrowellenfeld stark verändert. Dadurch wird die Erwärmung des Nahrungsmittels durch die direkte Aufnahme von Energie aus dem Mikrowellenfeld beeinträchtigt. Dies wirkt sich wiederum in einer Verlangsamung des Zubereitungsprozesses aus, weil ja die Wärmeübertragung vom Behälter an das Gut durch Kontaktwärme und somit langsam erfolgt.

Aus der US 5 698 125 ist ein Mikrowellenofen mit einer Vorrichtung zum Bereitstellen eines hochfrequenten Magnetfeldes bekannt. Dieses magnetische Wechselfeld wird zum induktiven Erwärmen, bzw. Erwärmen mittels Induktionsströme, eines Aufnahmebehälters, insbesondere einer Bratpfanne auf der Auflagefläche im Mikrowellenofen eingesetzt. Dabei wird der Ofenboden so ausgebildet, dass das magnetische Wechselfeld von aussen in den Ofeninnenraum eindringen, die Mikrowellen aber nicht aus dem Ofen austreten können. Im Boden des Ofeninnenraumes sind dazu zwei Schichten mit einer Vielzahl gerader Leiterbahnen angeordnet. Die Leiterbahnen der beiden Schichten verlaufen quer zueinander. Wenn nun etwa ein Hamburger auf beiden Seiten angebraten und im Zentrum genügend erhitzt werden soll, so muss die Bratpfanne zum Wenden des Hamburgers aus dem Ofen genommen werden. Dies ist mit einem Kontrollaufwand verbunden, weil ja das Wenden im richtigen Zeitpunkt erfolgen muss. Zudem ist das Herausnehmen aus dem Ofen, das Wenden und wieder Einbringen in den Ofen mit Arbeit und mit einem Zeitverlust verbunden.

Aus der US 5 616 266 ist ein Mikrowellenofen bekannt, an dessen Rückwand ein elektrisches Widerstands-Heizelement angeordnet ist. Das flächige Heizelement ermöglicht eine Erhitzung des Ofeninnenraumes. Dadurch kann ein in konventionellen Backöfen durchführbarer Zubereitungsprozess auch in einem Mikrowellenofen durchgeführt werden. Aufgrund des Mikrowellenbeitrages kann der Gesamtprozess etwas beschleunigt werden. Trotzdem kann kein schnelles Anbraten oder Bräunen erzielt werden.

Die bekannten Mikrowellenöfen sind im Verhältnis zu den zu erwärmenden Beilagenportionen sehr gross.

Der Erfindung liegt nun die Aufgabe zugrunde, eine klein dimensionierte Vorrichtung und/oder ein Verfahren zu finden, die bzw. das es mit kleinem Aufwand ermöglicht, Nahrungsmittelportionen in äusserst kurzer Zeit zumindest an einer Seite zu rösten bzw. anzubraten und im Innern auf eine gewünschte Temperatur zu bringen.

Diese Aufgabe wird durch die Merkmale des Anspruches 1 oder 9 gelöst. Die abhängigen Ansprüche beschreiben vorteilhafte Ausführungsvarianten. Damit werden in der Regel auch grössere Gewichtsverluste der Nahrungsmittelportion beim Erhitzen vermieden.

Bei der Lösung der Aufgabe wurde erkannt, dass die zum Zubereiten von Nahrungsmitteln eingesetzten Mikrowellenöfen Standardöfen sind. Deren Innenmasse sind wesentlich grösser als die Aussenmasse von Beilagenportionen, bzw. Produkteportionen. Die Masse sind so gross gewählt, dass sowohl verschiedene Teller, Platten oder Schüsseln mit Nahrungsmitteln, als auch Becher mit Getränken einsetzbar sind. Zudem soll der Innenraum für die verwendeten Mikrowellen möglichst viele Resonanzen haben. Um zu gewährleisten, dass die eingebrachten Nahrungsmittel im wesentlichen unabhängig von deren Position im Ofen erwärmt werden, wird versucht, durch die Überlagerung vielfach reflektierter Teilwellen ein Multimod-Mikrowellenfeld aufzubauen, dessen Energiedichte möglichst gleichmässig verteilt ist. Um ein ungestörtes Reflektieren der Teilwellen und ein Einwirken der Teilwellen auf das Produkt von allen Richtungen zu ermöglichen, wird entlang der Ofeninnenberandung ein Randbereich freigehalten. Die Auflagefläche ist entsprechend von der Berandungefläche beabstandet im Ofeninnern angeordnet. Weil eine vergleichmässigte Energiedichte mit einfachen Mitteln nicht genügend gut erzielbar ist und das Feld auch vom eingebrachten Gut abhängt, wird in vielen Mikrowellenöfen ein Drehteller zur Aufnahme des zu erwärmenden Gutes angeordnet. Auf dem drehenden Teller gelangt das Gut durch verschiedene Feldbereiche, was zu einer Vergleichmässigung der Erwärmungswirkung führt.

In einem ersten Schritt zur Lösung der Aufgabe wurde erkannt, dass nicht von den Lösungsansätzen der Standard-Mikrowellenöfen ausgegangen werden darf. Es musste vielmehr eine Lösung gesucht werden, die zunächst davon ausgeht, dass die Massunterschiede verschiedener Beilagenportionen nicht gross sind und die Portionen immer im wesentlichen gleich im Mikrowellenofen positioniert werden können. Anstelle einer räumlich möglichst konstanten Verteilung der Energiedichte des Mikrowellenfeldes soll das Mikrowellenfeld in Anwesenheit der Produkteportion so ausgebildet sein, dass diese möglichst schnell und möglichst vollständig erhitzt wird.

Die gängigen Produkteportionen sind im wesentlichen schichtförmig und haben Längs- und Querausdehnungen im Bereich von 5 bis 20cm. Die Schichtdicke liegt im Bereich von 0.5 bis 6cm. Zur Aufnahme solcher Portionen genügt also ein Aufnahmebereich von ca. 20x20x6cm. Weil das Mikrowellenfeld von einer Quelle, bzw. einem Magnetron aus aufgebaut wird, muss zwischem dem Magnetron und der zu erwärmenden Portion ein Ausbreitungsbereich für die Mikrowellen vorgesehen werden. Die gängigen Produkte haben im aufgetauten Zustand grosse Dielektrizitätskonstanten und führen entsprechend zu einer starken Mikrowellen-Absorption. Wenn nun beispielsweise von Eindringtiefen im Bereich von ca. 3cm ausgegangen wird, so ist anschaulich klar, dass die Mikrowellenausbreitung in der Schichtrichtung durch das Produkt nicht genügt, um den vom Magnetron abgewandten Bereich des Produktes mit Mikrowellen genügend hoher Energiedichte zu beaufschlagen. Im Bereich gegen das Magnetron wäre das Produkt sehr stark, im davon abgewandten Bereich aber nur sehr schwach erwärmt. Bei einer Erwärmung lediglich eines dem Magnetron zugewandten Teilbereiches wäre es durch das Drehen der Produkteportion zwar möglich, die Temperaturverteilung zu vergleichmässigen. Anstelle der vorwiegenden Erwärmung des dem Magnetron zugewandten Teilbereiches, sollen aber bevorzugt der Ausbreitungs- und der Aufnahmebereich so dimensioniert sein, dass sich das Mikrowellenfeld auch um die Produkteportion ausbreiten kann. Dadurch stehen auch im abgewandten Teilbereich genügend hohe Energiedichten zur Verfügung.

Bei der Dimensionierung des Mikrowellenraumes muss die Frequenz, bzw. die Wellenlänge des Magnetrons berücksichtigt werden. Bei der Wahl der Frequenz ist man an die zugelassenen Frequenzen von 2.45, 5.8 oder 24GHz gebunden. Obwohl sich mit 5.8 Ghz geringere Diffusionswege ergeben und daher unter bestimmten Voraussetzungen vorteilhaft sein mögen, haben die für Heizzwecke gängigerweise, insbesondere aufgrund der tiefen Kosten, eingesetzten Magnetrons in der Regel eine Frequenz von 2.45 GHz und entsprechend eine Wellenlänge im Vakuum von ca. 12.5 cm. Wenn nun oben von einem schichtförmigen Aufnahmebereich mit einer Länge und einer Breite im Bereich von ca. 20 cm und einer Mächtigkeit von 6 cm ausgegangen wurde, so zeigt es sich, dass die Ausdehnung in Schichtrichtung, bzw. das Längsmass zwischen einer und zwei Wellenlängen der bevorzugt einzusetzenden Mikrowellen liegt.

In einem zweiten Schritt zur Lösung der Aufgabe wurde erkannt, dass bei der Verwendung eines Magnetrons mit einer Frequenz von 2.45 GHz die Längsausdehnung des schichtförmigen Aufnahmebereiches vorzugsweise im wesentlichen im Bereich von 25cm, also von zwei Wellenlängen liegen soll. Der Zuführ- bzw. Einspeisbereich mit dem Magnetron soll vorzugsweise in seiner Längsrichtung im Bereich einer Wellenlänge, also im Bereich von 12.5 cm liegen.

Durch die Dimensionierung der Längsausdehnung des Aufnahmebereiches und des Einspeisbereiches eines schichtförmigen Gesamtbereiches im Bereich von wenigen Vielfachen der Wellenlänge und durch das Vorsehen von im wesentlichen ebenen Reflektionsflächen zur Berandung der Längsausdehnung wird eine quasi stehende Wellenstruktur mit wenigen Knotenlinien bzw. eine Monomod-Struktur erzielbar. Eine solche Monomod-Struktur ist zur Erzielung wenigstens eines Teils der erfindungsgemässen Wirkung auch unabhängig von der Ausbildung wenigstens einer Berandungsfläche des Mikrowellenraumes als Bratfläche denkbar. Der Mikrowellenraum hat für die verwendete Wellenlänge nur wenige Resonanzen. Die Wellenstruktur wird nicht durch eine Überlagerung von vielfach reflektierten Teilwellen geprägt. Dies gilt auch dann, wenn die effektive Wellenlänge aufgrund der Dielektrizitätskonstanten des Produktes noch etwas von dieser Wellenlänge abweicht. Ein vielfaches Reflektieren ist nicht möglich, weil der Bereich schichtförmig ist und weil dazu ein grosser Wellenanteil mehrmals durch die Produkteportion, die einen grossen Teil des Aufnahmebereiches ausfüllt, laufen müsste. Die Absorption in der Produkteportion ist aber bei einem gängigen Produkt so hoch, dass eine Teilwelle nicht mehrmals durch die Produkteportion laufen kann. Daher mag das Verfahren erfordern, die Produkte geringfügig anzupassen. Nur eine quasi stehende Wellenstruktur kann sich als vom Magnetron angeregte erzwungene Schwingung aufbauen. Eine stehende Welle hat den Vorteil, dass sie sich über den gesamten Aufnahmebereich und somit über die ganze Produkteportion ausdehnt. Die Knotenbereiche, in denen nur wenig Wärme gebildet wird, sind so schmal, dass von benachbarten Bereichen mit grossen Amplituden genügend schnell Wärme in diese Knotenbereiche gelangt.

Impedanzmessungen und anschliessende Erhitzungsversuche im schichtförmigen Aufnahme- bzw. Mikrowellenraum mit einer in verschiedenen Abständen zum Magnetron angeordneten scheibenförmigen Produkteportion haben gezeigt, dass die Lage mit der maximalen Impedanz nicht mit der Lage der gleichmässigsten Erwärmung übereinstimmt. Wenn das Produkt so angeordnet ist, dass die Impedanz maximal ist, so wird es an der dem Magnetron zugewandten Seite kreissektorförmig überhitzt bzw. angebrannt, während es sonst kalt bleibt. Es scheint, dass bei der Lage mit der maximalen Impedanz keine stehende Wellenstruktur aufgebaut werden kann, sondern ein vorwiegender Anteil der vom Magnetron ausgehenden Energie als Strahlung direkt absorbiert wird. Durch die Erhöhung des Abstandes zwischen der Produkteportion und dem Magnetron konnte eine Lage gefunden werden, in der die Impedanz kleiner ist, die Erwärmung aber äusserst schnell und im wesentlichen über die ganze Portion erfolgt. Es wurde festgestellt, dass die Temperaturverteilung direkt nach dem Erhitzen einen radialen Gradienten aufweist. Im Innern war die Temperatur am tiefsten und aussen am höchsten. In einem Test wurde direkt nach dem Erhitzen aussen eine Temperatur von 95°C und im Zentrum eine Temperatur von 70°C gemessen. Zirka 30 sec nach der Entnahme hatten sich die Temperaturen dann im wesentlichen ausgeglichen und es wurde überall eine Temperatur über 85°C gemessen.

Der schichtförmig ausgebildete Mikrowellenraum kann eine Mächtigkeit haben, die direkt der Mächtigkeit der Produkteportion angepasst ist. Das heisst also, dass die zum Erhitzen nötige Mikrowellenamplitude auch im Nahbereich der grossen Berandungsflächen erzielbar ist. Der von diesen grossen Berandungsflächen beidseits, insbesondere oben und unten, abgeschlossene Mikrowellenraum kann somit eine Schichtdicke haben, die kleiner als 12cm, bzw. kleiner als eine Wellenlänge, und insbesondere auch kleiner als 6cm, bzw. kleiner als eine halbe Wellenlänge ist. Weil das Anordnen des Produktes im Kontakt mit den grossen Berandungsflächen nicht zu unerwünschten Störungen des monomodartigen Mikrowellenfeldes führt, kann auf eine Auflagefläche *im Innern* des Mikrowellenraumes verzichtet werden. Entsprechend wird zumindest eine grosse Berandungsfläche als Aufnahme- bzw. Kontaktfläche für das Produkt ausgebildet werden. Vorzugsweise sind aber beide grossen Berandungsflächen als Kontaktflächen ausgebildet. Weil nun die Berandungsfläche direkt als Kontaktfläche für das Produkt ausgebildet ist, kann sie sowohl als Reflektionsfläche für die Mikrowellen als auch als Heiz- bzw. Bratfläche zum Abgeben von Wärme an das anliegende Produkt ausgebildet werden.

Zum Gewährleisten der Mikrowellen-Reflexion muss die Berandung eine elektrisch leitende Schicht, beispielsweise ein Drahtgewebe oder eine metallische Beschichtung, umfassen. Um von aussen zugeführte Wärme abgeben zu können, muss die Berandung wärmeleitend sein oder aber Wärmestrahlung durchtreten lassen. An der wärmeabgebenden Kontaktfläche kann das zu erhitzende Produkt angebraten, bzw. geröstet werden. Um zu verhindern, dass das Produkt an der Kontaktfläche haften bleibt, ist diese vorzugsweise mit einer haftungsarmen Beschichtung ausgebildet.

Die Kombination des Anbratens an mindestens einer Bratfläche und des Erhitzens in einem Mikrowellenfeld ermöglicht es, tiefgekühlte Produkte, insbesondere z.B. Rösti-Portionen, innerhalb von 100, gegebenenfalls auch von nur 90 sec zuzubereiten. Wenn ein gefrorenes Produkt zubereitet wird, zeigt die Kombination der Mikrowellen mit einer oder zwei am Produkt anliegenden Bratplatten eine Wirkung, die über die Summe der Einzelwirkungen hinausgeht. Dieser weitergehende Effekt ergibt sich aufgrund der Tatsache, dass die Dielektrizitätskonstante von Eis wesentlich unter jener von Wasser liegt. Im gefrorenen Zustand kann das Produkt deutlich weniger Energie aus dem Mikrowellenfeld aufnehmen, als im geschmolzenen Zustand. Eine heisse Bratplatte führt zu einem schnellen Auftauen des Produkte-Randbereiches. Dort wird die Mikrowellen-Erwärmung aufgrund der grösseren Dielektrizitätskonstanten des Wassers erhöht wirksam, was zu einem schnellen Aufschmelzvorgang vom Rand gegen das Zentrum des Produktes führt. Das anfänglich schnelle Schmelzen an der mindestens einen Bratplatte ermöglich einen anderen Aufschmelzvorgang als beim Schmelzen lediglich mit Mikrowellen. Bei Versuchen mit einem Testprodukt hat sich gezeigt, dass für das Auftauen von -18°C auf 0°C ca. 40 sec und für das anschliessende Erwärmen von 0°C auf 70°C nochmals ca. 50 sec benötigt werden.

Um eine vielseitig einsetzbare Vorrichtung zu erhalten, werden die elektrischen Komponenten vorzugsweise so ausgelegt und betrieben, dass die maximal benötigte elektrische Leistung 10 A nicht überschreitet. Beispielsweise werden zwei Bratflächen bzw. Bratplatten je mit einer Heizvorrichtung von 900 W erwärmt und die Mikrowellen-Garleistung, bzw. die elektrische Leistung des Magnetrons, wird auf 1260 W (bei einer Stromaufnahme von 1800 W) festgelegt. Um nicht mehr als 10 A zu benötigen, werden alternierend das Magnetron oder die Heizvorrichtungen betrieben. Die Bratplatten haben vorzugsweise eine Wärme-Speicherkapazität und können dadurch Wärme, die vor dem Einlegen des Produktes bereitgestellt wurde, auch noch bei nicht geheizten Platten abgeben. Im röstbereiten Zustand werden die Bratplatten auf einer Brattemperatur von vorzugsweise im wesentlichen 275°C gehalten, oder es wird eine besonders rasche Aufheizung vorgesehen. Das tiefgekühlte Produkt wird an eine gewünschte Position zwischen die Bratplatten gefördert. Die Bratplatten werden mit leichtem Druck gegen das eingebrachte Produkt gepresst, wobei etwa eine der beiden Bratplatten elastisch gelagert ist und dabei die Presswirkung erzielt. Die Heizvorrichtungen für die Bratplatten werden ausgeschaltet und das Mikrowellenfeld wird aufgebaut und während ca. 90 sec aufrechterhalten. Die Bratplatten-Temperatur sinkt aufgrund der Wärmeabgabe kontinuierlich ab. Das Absinken und die dabei erreichte minimale Temperatur hängt von der Wärmekapazität der Bratplatten und der Wärmeaufnahme des Produktes ab. In einer abschliessenden Phase wird das Magnetron ausgeschaltet und die Heizvorrichtungen werden wieder eingeschaltet. Die Bratplatten-Temperatur steigt wieder gegen die Brattemperatur an. Das Produkt wird nun während einer Zeit von ca. 20 sec an der Oberfläche fertig gebräunt. Dann wird das Produkt in einen Aufnahmebehälter oder auf einen Teller ausgegeben. Die Kerntemperatur soll bei, oder kurze Zeit nach, der Ausgabe mindestens 65°C betragen. Unterschiedliche Produkte und Portionsgrössen können mit der erfindungsgemässen Vorrichtung in weniger als 3 Minuten zubereitet werden.

Die vorteilhaften Brattemperaturen und die Zeitintervalle, während welcher die Bratplatten über einer vorgegebenen Mindesttemperatur gehalten und insbesondere beheizt werden, hängen vom zu erwärmenden Produkt ab. Wenn die elektrische Speisung bei 220 V nicht auf 10 A, bzw. die Leistung nicht auf 2200 W beschränkt ist, so ist es gegebenenfalls zweckmässig, die Heizvorrichtungen und das Mikrowellenfeld gleichzeitig zu speisen. Bei einer Leistungsbeschränkung könnte das Abwechseln zwischen Mikrowellen- und Bratplattenspeisung auch in kürzeren Zeitintervallen bzw. häufiger erfolgen. Bei einem Fischprodukt muss die effektive Wärmeleistung des Mikrowellenfeldes reduziert werden. Dies könnte über die Reduktion der Leistung des Magnetrons oder aber durch ein Ein- und Ausschalten des Mikrowellenfeldes erreicht werden. Gegebenenfalls kann aber auch in die erfindungsgemässe Vorrichtung ein an sich bekannter Drehteller eingesetzt werden.

Die Vorteile des kleinen Mikrowellenraumes lassen sich auch bei industriellen Grossanlagen dadurch gewinnen, dass für die Massen- bzw. Serienzubereitung von Nahrungsmittelportionen die erfindungsgemässe Vorrichtung vervielfacht wird.

Eine Steuerung, deren Steuerfunktionen insbesondere von einem Messwert abhängen, vorzugsweise von einer Temperaturmessung, ermöglicht es, den Erhitzungsvorgang entsprechend dem jeweiligen Produkt durchzuführen. Neben der Temperatur der Bratplatten können auch andere Grössen, insbesondere etwa ein seitlich erfasster Abstrahlungswert des Produktes, oder eine im Produkt erfasste Temperatur ermittelt werden. Gegebenenfalls wird auch die Krustenbildung mit einem Messverfahren erfasst. Die Steuerung kann vorzugsweise zwei Bratplatten unabhängig voneinander ein und ausschalten und insbesondere auch auf unterschiedliche Temperaturen erhitzen. Bei einer äusserst vielseitig einsetzbaren Ausführungsform können das Magnetron und die Bratplatte(n) von der Steuerung zu beliebigen Zeitpunkten ein- und ausschaltbar sein. Bei Vorrichtungen, die das Produkt automatisch in den Mikrowellenraum fördern und nach der Zubereitung auch automatisch entnehmen, muss die Steuerung auch die Verschliessvorrichtung mindestens einer Öffnung zum Mikrowellenraum, sowie die Zuführ- und Entnahmeorgane steuern. Die Steuerung gewährleistet mit einer Zustellvorrichtung am Anfang des Bratvorganges das Anpressen der Bratflächen am Produkt und am Ende der Zubereitung das Auseinanderbewegen der Bratflächen. Um Gefahren zu vermeiden, ist die Steuerung auch mit Kontrollsensoren verbunden, die beispielsweise kontrollieren, ob ein Produkt eingeführt und der Mikrowellenraum richtig verschlossen ist.

Neben den Variationen in der Steuerung des Brat- und Erhitzungsvorganges kann auch die Vorrichtung an ein spezielles Produkt angepasst sein. Zum Bereitstellen von Produkten mit nur einer angebratenen Aussenfläche wird gegebenenfalls nur eine Bratplatte vorgesehen, oder aber nur eine der beiden Bratplatten erhitzt. Bei speziellen Produkten, insbesondere bei Spiegeleiern, darf von oben keine Platte an das Produkt gepresst werden. Die erfindungsgemässe Vorrichtung kann auch zum Zubereiten von Produkten ausgelegt werden, die an der Unterseite gebraten und von oben her gegrillt sind. Dazu wird neben einer unteren Bratplatte eine obere Grillvorrichtung vorgesehen. Die Strahlungsenergie der Grillvorrichtung wird gegebenenfalls durch eine elektrisch leitende Schicht, beispielsweise ein Drahtnetz oder eine metallbedampfte Glasplatte, in den Mikrowellenraum eingestrahlt. Dadurch wird verhindert, dass das Mikrowellenfeld mit der Grillvorrichtung in Wechselwirkung tritt.

Die Zeichnungen erläutern die Erfindung anhand eines Ausführungsbeispieles. Dabei zeigt
- Fig. 1: einen vertikalen Schnitt durch eine Vorrichtung mit einem Mikrowellenraum und zwei Bratflächen,
- Fig. 2: eine Draufsicht auf eine Bratfläche mit einer scheibenförmigen Portion Kartoffelraspeln,
- Fig. 3: eine schematische Darstellung eines vertikalen Schnittes durch zwei Bratflächen und den dazwischenliegenden Mikrowellenraum,
- Fig. 4: eine Draufsicht auf die Bratfläche mit dem Produkt, mit dem Magnetron und dessen Kühl-Ventilator,
- Fig. 5: eine Seitenansicht des Magnetrons mit Ventilator, des Zuführhohlleiters und des Mikrowellenraumes,
- Fig. 6: einen vertikalen Schnitt durch eine schief gestellte Vorrichtung gemäss Fig. 1, bei der an oberen bzw. unteren schmalen Berandungen eine Einbzw. Austrittsöffnung ausgebildet ist,
- Fig. 7: einen vertikalen Schnitt durch eine Vorrichtung mit einer schubladenartigen unteren Bratfläche, wobei oben der ausgezogene und unten der eingeschobene Zustand dargestellt ist,
- Fig. 8: einen vertikalen Schnitt durch eine schachtelartige Vorrichtung, bei der der Bodenteil nach oben in den bzw. nach unten aus dem Deckelteil bewegbar ist,
- Fig. 9: einen vertikalen Schnitt durch eine Vorrichtung mit einem Band-Fördersystem

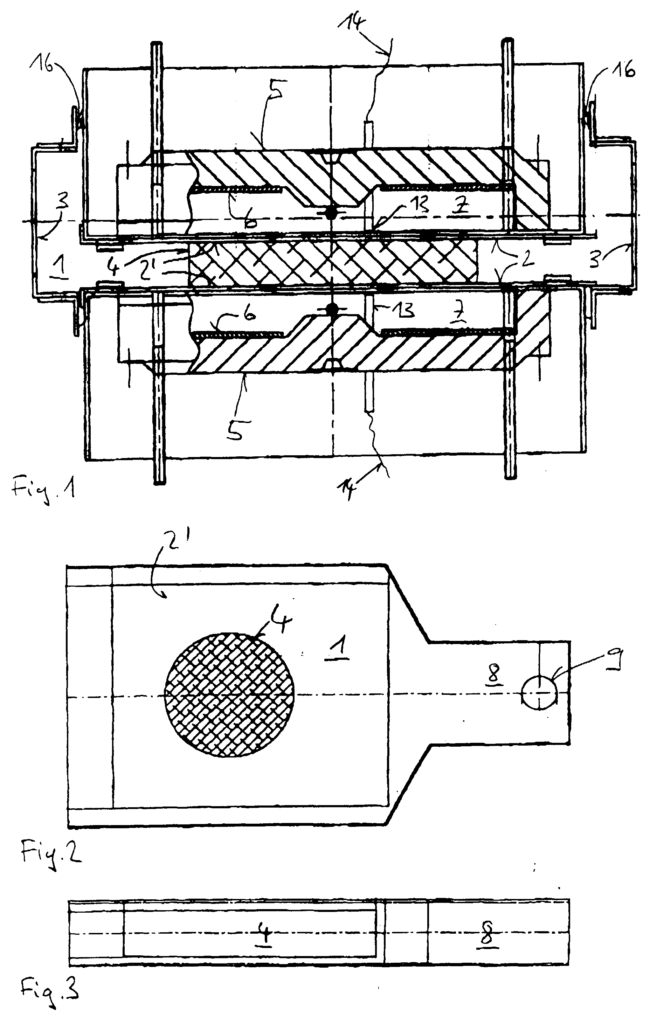

Fig. 1 zeigt eine Vorrichtung zum Zubereiten von Nahrungsmittel-Portionen mit einem schichtförmigen Mikrowellenraum 1, der zwei grosse ebene Berandungen 2 und diese verbindende schmale Berandungen 3 hat. Die Berandungen sind elektrisch leitend oder sie sind mit einer leitenden Beschichtung versehen, so dass sie Mikrowellen reflektieren. Zumindest Teilflächen der grossen Berandungen 2 sind als Bratflächen 2' ausgebildet. Die Bratflächen 2' haben eine haftungsarme Oberfläche, so dass ein daran anliegendes Produkt 4 auch nach dem Rösten im wesentlichen rückstandsfrei entnehmbar ist.

Die Bratflächen 2' werden gegebenenfalls aus wärmestrahlungs-durchlässigem Material, gegebenenfalls aus Glas, gebildet, so dass die Wärmestrahlung direkt die Kontaktfläche bzw. Aussenfläche des Produktes 4 heizbar macht. Eine Glas- insbesondere Ceranplatte müsste mit einer elektrisch leitenden Schicht und gegebenenfalls mit einer haftungsarmen Schicht, insbesondere für Wärmestrahlung im wesentlichen transparentem Teflon, vorzugsweise aber transparentem PFA, beschichtet sein. Die elektrisch leitende Schicht könnte auch auf der vom Produkt abgewandten Aussenseite der Glasplatte angeordnet sein. Auf der Aussenseite könnte anstelle einer aufgedampften Metallschicht auch ein Drahtnetz als elektrisch leitende und wärmestrahlungs-durchlässige Schicht angeordnet werden. Die Kombination einer Wärmestrahlungsquelle mit einer Bratplatte an der das Produkt nicht haftet und welche Wärmestrahlen durchlässt, Mikrowellen aber reflektiert ist sehr vorteilhaft. Wenn das Bratgut an einer solchen Bratplatte, insbesondere an einer Glasplatte anliegt und die Strahlungsquelle eingeschaltet wird, so gelangt sofort Wärme ins Bratgut. Die Glasplatte wird auch erwärmt und ermöglicht nach kurzer Zeit auch ein Anbraten des bereits angewärmten Produktes. Ein derartiges Anbraten ist bei gefrorenen Produkten vorteilhaft.

Vorzugsweise wird aber eine Bratplatte verwendet, die von einer Heizvorrichtung Wärme aufnimmt und diese als Kontaktwärme an das Produkt abgibt. In der dargestellten Ausführungsform ist eine auswechselbare Aluminiumplatte, oder vorzugsweise eine antihaftende, nicht rostende und säurebeständige Edelstahlplatte, als Bratplatte 2' vorgesehen. Die Bratplatte 2' ist mit einer Grundstruktur 5 verbunden. Auf der Grundstruktur ist eine Heizspirale 6 angeordnet, die Strahlungswärme über einen Abstandsbereich 7 an die Rückseite der Bratplatte 2' übertragbar macht. Die Grundstruktur 5 ist vorzugsweise aus keramischem Material gebildet. Es versteht sich von selbst, dass beliebige andere bekannte Heizanordnungen zum Erhitzen der Bratplatten 2' eingesetzt werden können. Um die Temperatur jeder Bratplatte 2' auf einen gewünschten Wert bringen zu können, ist jeder Bratplatte 2' ein Temperatursensor 13 zugeordnet. Die Temperatursensoren 13 sind über Kabel 14 mit einer (nicht dargestellten) Steuerung verbunden.

Um den Abstand der Bratplatten 2' an das eingesetzte Produkt 4 anpassen zu können, ist zwischen den beiden Grundstrukturen 5 zumindest eine Führungs- und vorzugsweise auch eine Pressvorrichtung angeordnet. Die Verbindung zwischen den grossen und den schmalen Berandungen 2 und 3 ist so ausgebildet, dass in allen Lagen das Austreten von Mikrowellen verhindert wird. Im dargestellten Beispiel sind elektrische Kontaktstreifen 16 eingesetzt, wie sie etwa von Schaltkästen bekannt sind. Gegebenenfalls ist die Dichtung mit den Kontaktstreifen 16 so ausgeführt, dass die beiden Bratflächen 2' etwas aus ihrer parallelen Lage verschwenkbar sind. Dies ist bei Produkten vorteilhaft, deren grosse Aussenflächen nicht parallel ausgerichtet sind. Beim Pressen kann sich die gepresste Bratfläche 2' mittels einer kleinen Neigebewegung an die ihr zugewandte Oberfläche anpassen.

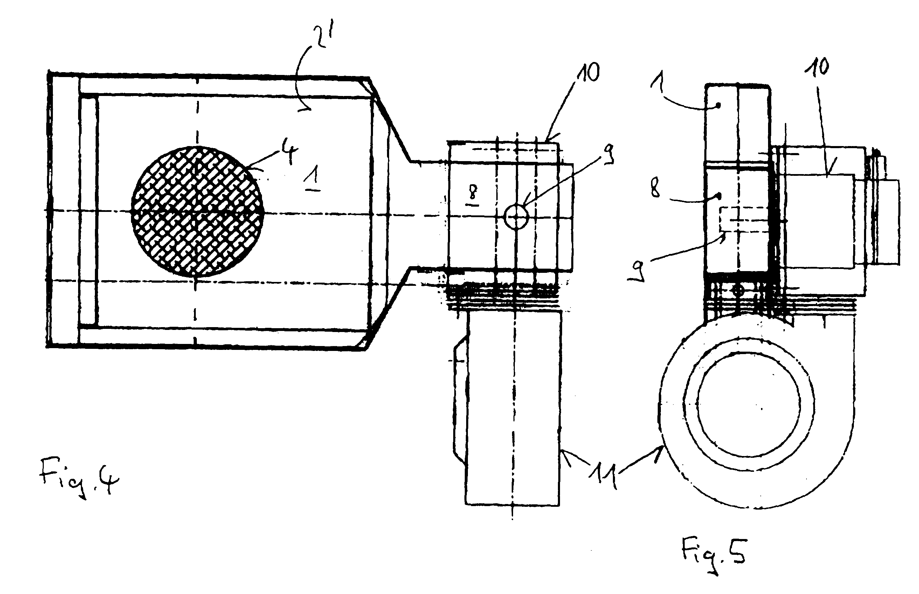

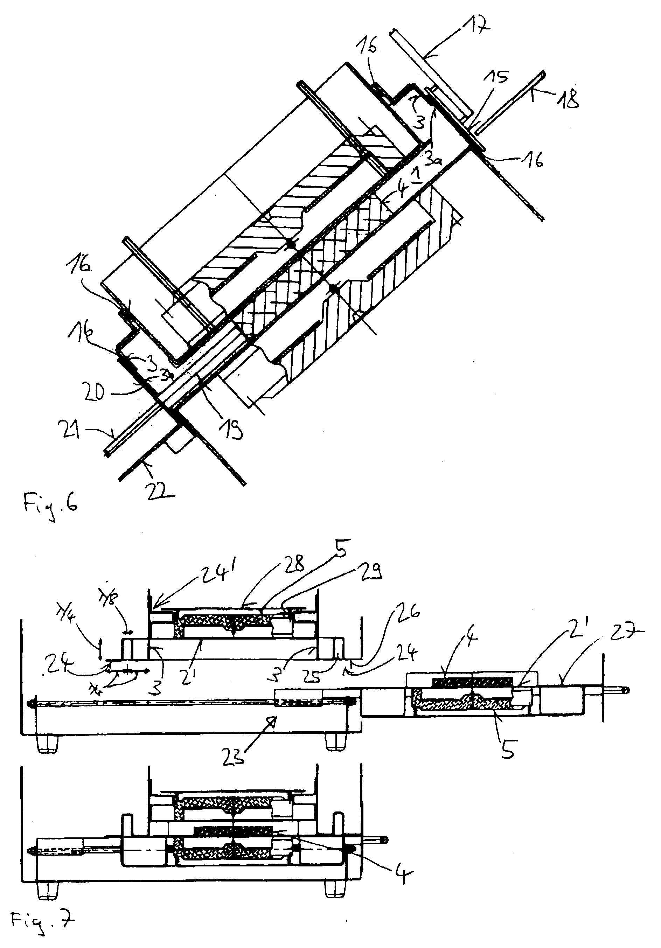

Die bevorzugte Dimensionierung des Mirowellenraumes 1 und eines Einspeisbereiches 8 ist schematisch den Fig. 2 und 3 zu entnehmen. Der Mikrowellenraum 1 hat eine Längsausdehnung im Bereich von 20 bis 30 cm, vorzugsweise von im wesentlichen 25 cm, eine Querausdehnung im Bereich von 15 bis 30 cm, vorzugsweise von im wesentlichen 20 cm und eine Mächtigkeit, die im Bereich von 1 bis 7 cm liegt, vorzugsweise aber in diesem Bereich verstellbar ist. Zum Einspeisen der Mikrowellen ist ein Einspeisbereich 8 bzw. ein Hohlleiter mit einem Sender 9 vorgesehen, der zentral in der Längsrichtung des Mikrowellenraumes 1 an diesen anschliesst und sich über eine Länge im Bereich von 10 bis 20 cm, vorzugsweise von im wesentlichen 15 cm erstreckt. Die Breite des Einspeisbereiches 8 liegt etwas unter einem Drittel der Querausdehnung des Mikrowellenraumes 1 und weitet sich gegen diesen etwas auf.

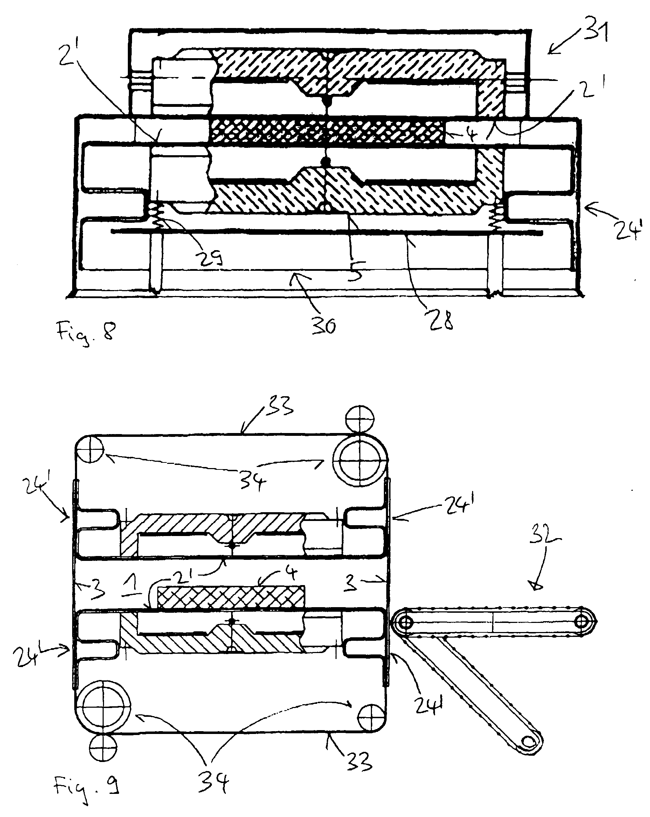

Der Sender 9 gehört gemäss Fig. 4 und 5 zu einem Magnetron 10, das Mikrowellen mit einer Frequenz von 2.45 GHz erzeugt. Zur Kühlung des Magnetrons ist ein Ventilator 11 an diesem befestigt. Die Position des Senders 9, der Einspeisbereich 8 und der Mikrowellenraum 1 müssen so aufeinander und auf das Produkt abgestimmt sein, dass das Produkt an der gewählten Position optimal bzw. schnell und im wesentlichen homogen zubereitet wird. Um eine einfache Feinabstimmung zu ermöglichen, ist vorzugsweise ein verstellbares Abstimmelement zwischen Sender 9 und Produkt 4 angeordnet. Nebst dem Abstimmelement können auch Leit- oder Polarisationselemente eingesetzt werden.

Fig. 6 zeigt eine Ausführungsform, bei der eine Vorrichtung gemäss Fig. 1 schief gestellt ist. In der oben liegenden schmalen Berandung 3 ist eine Eintrittsöffnung 3a, in der unten liegenden schmalen Berandung 3 eine Austrittsöffnung 3b ausgebildet. Die Eintrittsöffnung 3a ist durch eine obere Verschlussfläche 15 verschliessbar. Im verschlossenen Zustand ist ein um die Eintrittsöffnung führender Kontaktstreifen 16 zwischen der oberen Verschlussfläche 15 und dem Berandungsbereich um die Eintrittsöffnung 38 festgepresst, so dass eine elektrisch leitende Verbindung zwischen dem Berandungsbereich und der oberen Verschlussfläche 15 entlang des gesamten Kontaktstreifens 16 gewährleistet ist. Diese ringförmig geschlossene, elektrisch leitende Verbindung ist nötig, um ein Austreten von Mikrowellen und lichtbogenartige Entladungen zu verhindern. Austretende Mikrowellen und Entladungen sind aus Sicherheitsgründen nicht tolerierbar und würden auch zu Energieverlusten führen. Das Öffnen und Schliessen der Eintrittsöffnung 3a erfolgt über eine obere Führungs- und Betätigungseinrichtung 17. Bei offener Eintrittsöffnung 3a kann das Produkt 4 aufgrund der Schwerkraft über eine Zuführfläche 18 in den Mikrowellenraum 1 rutschen.

Um das Produkt 4 im Mikrowellenraum 1 an der gewünschten Position zu halten, ist ein Anschlagelement 19 aus nicht dielektrischem Material vorgesehen. Sobald das Produkt 4 am Anschlagelement 19 anliegt, kann die obere Bratfläche 2' von oben gegen das Produkt 4 gepresst werden. Das Anschlagelement 19 ist etwa an einer unteren Verschlussfläche 20 befestigt, welche die Austrittsöffnung 3b verschliessbar macht, und kann mit dieser aus dem Mikrowellenraum 1 herausgezogen werden. Im verschlossenen Zustand ist ein um die Austrittsöffnung führender Kontaktstreifen 16 zwischen der unteren Verschlussfläche 20 und dem Berandungsbereich um die Austrittsöffnung 3b festgepresst, so dass eine elektrisch leitende Verbindung zwischen dem Berandungsbereich und der unteren Verschlussfläche 20 entlang des gesamten Kontaktstreifens 16 gewährleistet ist. Das Öffnen und Schliessen der Austrittsöffnung 3b erfolgt über eine untere Führungs- und Betätigungseinrichtung 21. Bei offener Austrittsöffnung 3a und vom Produkt 4 abgehobenem Anschlagelement 19 kann das Produkt 4 aufgrund der Schwerkraft aus dem Mikrowellenraum 1 auf eine Weiterführungsfläche 22 rutschen. Bei dieser Lösung kann die Schwerkraft zur Beschickung und Entleerung des Mikrowellenraumes benützt werden. Zudem läuft eventuel frei werdende Flüssigkeit aus dem Mikrowellenraum ab.

Fig. 7 zeigt eine Vorrichtung, bei der die untere Bratfläche 2' mit ihrer Grundstruktur 5 unter der oberen Bratfläche 2' schubladenartig bewegbar ist. Zur Führung dieser Bewegung ist eine Geradführung 23 ausgebildet. Im ausgezogenen Zustand wird von einer nicht dargestellten Auflegevorrichtung ein Produkt 4 an der gewünschten Position auf die untere Bratfläche 2' gelegt. Anschliessend wird die untere Bratfläche 2' unter die obere Bratfläche 2' geschoben und dann die obere Bratfläche 2' mit den schmalen Berandungen 3 nach unten bewegt. Um die schmalen Berandungen 3 verläuft eine mit diesen verbundene λ/4-Dichtung 24. Diese λ/4-Dichtung 24 hat im Abstand λ/4, bzw. im Abstand eines Viertels der Mikrowellen-Wellenlänge, von den schmalen Berandungen 3 den zentralen Bereich einer ringförmig um den Mikrowellenraum 1 verlaufenden, nach oben ausgebildeten Nut 25 in einem zur Bratfläche 2' parallelen Kontaktbereich 26. Die Nuttiefe beträgt λ/4 und die Nutbreite λ/8. Die Distanz vom Nutzentrum zum äusseren Rand des Kontaktbereiches 26 ist wiederum λ/4. Wenn nun der Kontaktbereich 26 auf einer mit der unteren Bratfläche 2' dicht verbundenen Auflagefläche 27 für den Kontaktbereich 26, bzw. die λ/4-Dichtung, aufliegt, wird der Mikrowellenraum 1 radial nach aussen mikrowellendicht abgeschlossen. Die λ/4-Dichtungen haben den Vorteil gegenüber den Kontaktstreifen 16, dass auch bei leicht beabstandeten Flächen ein mikrowellendichter Abschluss möglich ist. Nach dem Zubereiten wird die untere Bratfläche 2' mit dem Produkt 4 nach dem Abheben der oberen Bratfläche 2' ausgezogen. Im ausgezogenen Zustand wird das Produkt 4 von einer nicht dargestellten Entnahmevorrichtung weiter geführt.

Im dargestellten Ausführungsbeispiel ist auch die Dichtung zwischen den schmalen Berandungen 3 und der gegen die untere Bratfläche 2' pressbaren, oberen Bratfläche 2' als λ/4-Dichtung 24' ausgebildet. Das Anpressen der oberen Bratfläche 2' erfolgt über eine Pressfläche 28 einer nicht eingezeichneten Betätigungsvorrichtung, die über Federelemente 29 mit der Grundstruktur 5 der oberen Bratfläche 2' verbunden ist.

Es versteht sich von selbst, dass die λ/4-Dichtungen auch in konstruktiv anderen Anordnungen und mit anderen Vermassungen ausgebildet werden können. Insbesondere kann in der Nut dielektrisches Material angeordnet werden, was die benötigten Masse um den Faktor 1/√ε verkürzt. Um völlig dichte Verbindungen zu schaffen, werden zusätzlich elektrische Kontakte empfohlen, die von einem kleinen Strom durchflossen werden und vorzugsweise selbstreinigend sind.

Fig. 8 zeigt eine schachtelartige Vorrichtung, bei der ein Bodenteil 30 mit einer unteren Bratfläche 2' nach oben in einen bzw. nach unten aus einem Deckelteil 31 bewegbar ist. Um den Mikrowellenraum 1 zwischen diesen beiden Teilen mikrowellendicht abzuschliessen, ist eine λ/4-Dichtung 24' ausgebildet. Wenn der Bodenteil 30 vollständig aus dem Deckelteil 31 herausgezogen ist, kann eine nicht dargestellte Manipuliervorrichtung das Produkt auflegen oder entnehmen. Das Pressen der unteren Bratfläche 2' mit dem Produkt gegen die obere Bratfläche 2' erfolgt über eine Pressfläche 28 einer nicht eingezeichneten Betätigungsvorrichtung, die über Federelemente 29 mit der Grundstruktur 5 der unteren Bratfläche 2' verbunden ist.

Fig. 9 zeigt eine Ausführungsform, bei der das Produkt von einer Zuführ- und Weiterleitvorrichtung 32, gegebenenfalls mit schwenkbaren Transportbändern, zum Mikrowellenraum 1 und von diesem weg förderbar ist. Beim aufeinanderfolgenden Zubereiten von Produkten mit unterschiedlichen Würzungen, insbesondere mit oder ohne Zwiebeln bzw. Knoblauch, oder salzig bzw. süss, muss ein Verschleppen von Geschmacksträgern verhindert werden. Da die Bratflächen 2' im Mikrowellenraum nicht gut reinigbar sind, wurde eine Lösung entwickelt, bei der Bänder 33 über die Bratflächen geführt sind. Die Bänder 33 sind mit antihaftendem Material, wie etwa Teflon, beschichtet, oder aus diesem gebildet und werden von je einer Bandführungsvorrichtung 34 gehalten. Es ist möglich, diese Bänder 33 mit jeder Produktzubereitung um eine Produktlänge weiterzuführen und im Bereich ausserhalb des Mikrowellenraumes eine Reinigung durchzuführen. Eine andere Möglichkeit besteht darin, jeder Würzung einen Bandbereich zuzuordnen, der dann entsprechend dem gewünschten Produkt im Mikrowellenraum 1 auf den Bratflächen 2' positioniert wird, bevor das Produkt 4 zugeführt wird. Zum Zuführen oder Entnehmen eines Produktes 4 wird die der Weiterleitvorrichtung 32 zugewandte schmale Berandung 3 zur Freigabe des Mikrowellenraum-Zuganges wegbewegt. Die schmalen Berandungen 3 sind mittels λ/4-Dichtungen 24' mikrowellendicht mit der oberen und der unteren Bratfläche verbunden, wobei zur Durchführung der Bänder 33 Spaltbereiche frei bleiben.

Es versteht sich von selbst, dass die anhand verschiedener Beispiele beschriebenen Merkmale auch beliebig anders kombinierbar sind.

## Patentansprüche

1. Vorrichtung zum Zubereiten von Nahrungsmittel-Portionen (4), mit einem Mikrowellenraum (1), in dem eine Portion (4) erhitzbar ist, **dadurch gekennzeichnet, dass** zumindest ein Teil wenigstens einer Berandung (2) des Mikrowellenraumes (1) als Bratfläche (2') ausgebildet ist.

2. Vorrichtung nach Anspruch 1, dadurch gekennzeichnet, dass der Mikrowellenraum (1) schichtförmig ist und dabei zwei grosse Berandungen (2) sowie diese verbindende schmale Berandungen (3) hat, wobei vorzugsweise einander zugewandte Teilflächen der beiden grossen Berandungen (2), gegebenenfalls aber auch die schmalen Berandungen (3) als Bratflächen (2') ausgebildet sind.

3. Vorrichtung nach Anspruch 1 oder 2, dadurch gekennzeichnet, dass der Abstand zwischen den beiden Bratflächen (2') verstellbar und/oder die Temperatur der beiden Bratflächen (2') unabhängig voneinander regelbar ist.

4. Vorrichtung nach einem der Ansprüche 1 bis 3, dadurch gekennzeichnet, dass der Mikrowellenraum (1) und eine Einspeisvorrichtung (8,9) mit einem Magnetron (10) so ausgelegt sind, dass eine Monomod-Mikrowellenstruktur erzielbar ist, bzw. dass der Mikrowellenraum (1) mit der Portion (4) für die verwendete Wellenlänge nur wenige Resonanzen hat.

5. Vorrichtung nach einem der Ansprüche 1 bis 4, dadurch gekennzeichnet, dass der Mikrowellenraum (1) eine Längsausdehnung im Bereich von 20 bis 30 cm, vorzugsweise von im wesentlichen 25 cm, eine Querausdehnung im Bereich von 15 bis 30 cm, vorzugsweise von im wesentlichen 20 cm und eine Mächtigkeit hat, die im Bereich von 1 bis 7 cm liegt, vorzugsweise aber in diesem Bereich verstellbar ist.

6. Vorrichtung nach Anspruch 5, dadurch gekennzeichnet, dass zum Einspeisen der Mikrowellen ein Zuführbereich (8) bzw. ein Hohlleiter mit einem Magnetron (10), vorzugsweise mit einer Frequenz von 2.45 GHz, vorgesehen ist, der zentral in der Längsrichtung des Mikrowellenraumes (1) an diesen anschliesst und sich über eine Länge im Bereich von 10 bis 20 cm, vorzugsweise von im wesentlichen 15 cm erstreckt, wobei die effektive Wärmeleistung variierbar ist.

7. Vorrichtung nach einem der Ansprüche 1 bis 6, dadurch gekennzeichnet, dass jede Bratfläche (2'), vorzugsweise auswechselbar, an einer Grundstruktur (5) befestigt ist, die auch eine Heizvorrichtung (6), insbesondere eine Strahlungs-Wärmequelle trägt, wobei die Wärme von der Heizvorrichtung (6) durch die Bratfläche (2') zur beim Zubereiten daran anliegenden Nahrungsmittel-Portion (4) gelangt.

8. Vorrichtung nach Anspruch 7, dadurch gekennzeichnet, dass die Bratfläche (2) wärmestrahlungsdurchlässig ist, eine haftungsarme Oberfläche hat und Mikrowellen reflektiert, wobei sie vorzugsweise aus Glas gebildet ist, das gegen den Mikrowellenraum (1) mit einer für Wärmestrahlung im wesentlichen transparenten Antihaft-Beschichtung und gegebenenfalls auf der davon abgewandten Seite mit einer für Wärmestrahlung im wesentlichen transparenten, elektrisch leitenden Schicht, oder einem Drahtnetz versehen ist.

9. Vorrichtung nach Anspruch 7 oder 8, dadurch gekennzeichnet, dass sie eine Steuerung umfasst, welche die Mikrowellen bzw. das Magnetron (10) und die Heizvorrichtung (6) jeder Bratfläche (2') ein- und ausschaltbar macht.

10. Verfahren zum Zubereiten von Nahrungsmittel-Portionen (4), bei dem eine Erwärmung mittels Mikrowellen erfolgt, **dadurch gekennzeichnet, dass** zwei einander gegenüberliegende Randflächen der Portion (4) während der Mikrowelleneinwirkung mit Bratflächen (2') in Kontakt sind.

11. Verfahren nach Anspruch 10, dadurch gekennzeichnet, dass die Speisung des Magnetrons (10) zum Erzeugen der Mikrowellen und die Speisung der Heizvorrichtungen (6) zum Eintragen von Wärme an den Bratflächen (2') alternierend eingeschaltet werden, wobei vorzugsweise während einer initialen, und insbesondere während einer abschliessenden, Phase die Heizvorrichtungen (6), nach der initialen Phase jedoch das Magnetron (10) gespiesen wird.
